# EUROPÄISCHE PATENTSCHRIFT

(11) **EP 0 599 168 B1**
(45) Veröffentlichungstag und Bekanntmachung des Hinweises auf die Patenterteilung: **14.08.1996**
(21) Anmeldenummer: 93118426.1
(22) Anmeldetag: 15.11.1993
(51) Int. Cl.: F02M 67/12, F02M 67/02, F02M 69/08, F02M 51/08

(54) **Vorrichtung zum kombinierten Ausblasen von Kraftstoff und Luft**
Device for the combined ejection of fuel and air
Dispositif pour l'éjection combinée de combustible et d'air

(30) Priorität: 24.11.1992 DE 4239280
(43) Veröffentlichungstag der Anmeldung: 01.06.1994
(73) Patentinhaber: FEV Motorentechnik GmbH & Co. KG, D-52078 Aachen (DE)
(72) Erfinder: Pischinger, Franz, Prof.Dr.-techn., D-52072 Aachen (DE); Alt, Norbert, Dipl.-Ing., D-53424 Remagen (DE); Gürich, Gunter, Dr.-Ing., D-52074 Aachen (DE); Hüser, Michael, D-52064 Aachen (DE); Spiegel, Leo, Dr.-Ing., D-52062 Aachen (DE)
(74) Vertreter: Rauh, Wolfgang K., Dipl.-Ing. Patentanwalt

(56) Entgegenhaltungen:
- EP-A- 0 384 473
- WO-A-89/04921
- DE-A- 2 508 390
- US-A- 3 450 353

## Beschreibung

Die Erfindung betrifft eine Vorrichtung nach dem Oberbegriff des Patentanspruches 1.

Eine Vorrichtung dieser Art ist aus der WO-A-89/04921 bekannt. Hierbei bestehen die Ventilglieder für das Luft- und das Kraftstoffventil aus zwei einander konzentrisch überdeckenden Rohren, wobei das Ventilglied des Kraftstoffventils unmittelbar auf einem Sitz an der Ausblasöffnung des Gehäuses und das Ventilglied des Luftventils auf einem Sitz auf dem Ventilglied des Kraftstoffventils sitzt. Die beiden Ventile können nacheinander öffnen und schließen, wobei der Kraftstoff erst innerhalb der Brennkammer auf den vom Kraftstoffzulauf umgebenen Luftstrahl trifft und sich mit ihm mischt. Diese Freistrahlmischung, auch "Zerreißmischung" genannt, bewirkt eine unregelmäßige Vermischung beider Medien. Dabei unterliegt das Kraftstoffventil einer hohen thermischen Belastung, so daß die Kraftstofföffnung leicht verrußt. Auch können sich dort leicht Kraftstofftropfen anlagern. Der Verbrennungswirkungsgrad ist auch relativ gering.

Der Erfindung liegt daher die Aufgabe zugrunde, eine Vorrichtung der eingangs genannten Art so auszubilden, daß die Gefahr der Verschmutzung der Ventilsitzflächen sowie der thermischen Überbeanspruchung der Ventile vermieden und dadurch eine bessere Dosierung und Zerstäubung von Luft und Kraftstoff ermöglicht werden. Ferner soll die Vorrichtung mit einem Mindestmaß an Bauaufwand und mit elektronisch steuerbaren Stellmitteln betätigbar sein.

Die Lösung dieser Aufgabe besteht erfindungsgemäß in den kennzeichnenden Merkmalen des Anspruches 1.

Wesentliche Merkmale des beschrittenen Lösungsweges sind eine sehr raumsparende Konstruktion, die zu leicht steuerbaren Stellgliedern führt und eine Ventilanordnung, die eine Betätigung mit nur einem Elektromagneten je Einspritzdüse ermöglicht. Das bedeutet bei einer Mehrzylindermaschine eine beträchtliche Einsparung an Bau- und Wartungsaufwand sowie an Steuermitteln. Die leicht steuerbaren Stellglieder ermöglichen eine sehr genaue Dosierung der Medien und insbesondere die Zuführung und Dosierung von Kraftstoff ohne zusätzliche Stellglieder bei niedrigem Druck und mittels elektronischer Einrichtungen. Ein besonderer Lösungsschritt ist dabei die maßnahme, beide Ventile so anzuordnen, daß ihre Ventilglieder zur Ausblasseite hin öffnen. Dabei wird der Brennkammerdruck zum Schließen der Ventile ausgenutzt.

Ferner ergibt sich durch die gleichsinnige Anordnung der Ventile auch eine vereinfachte Bearbeitung der Ventilsitzflächen im Gehäuse von nur einer Seite her, wodurch Fertigungsfehler durch Umspannen vermieden werden. Die Ventilsitzflächen des hinter dem Luftventil angeordneten Kraftstoffventils werden wirksam vom Luftstrom sauber gehalten.

Da beide Ventile gleichsinnig schließen, kann die Vorrichtung sowohl im Saugrohr als auch in der Brennkammer benutzt werden, da der Brennkammerdruck auf beide Ventile gleichsinnig und im Schließsinne einwirkt.

In den Unteransprüchen sind weitere vorteilhafte Ausgestaltungen der Erfindung angegeben.

Nachstehend ist die Erfindung anhand von in der Zeichnung dargestellten Ausführungsbeispielen näher erläutert. Es zeigen:
- Fig.1: einen Längsschnitt durch eine Vorrichtung nach der Erfindung,
- Fig.2-4: Einzelheiten entsprechend A in Fig.1 von Ausführungsbeispielen in vergrößertem Maßstab.

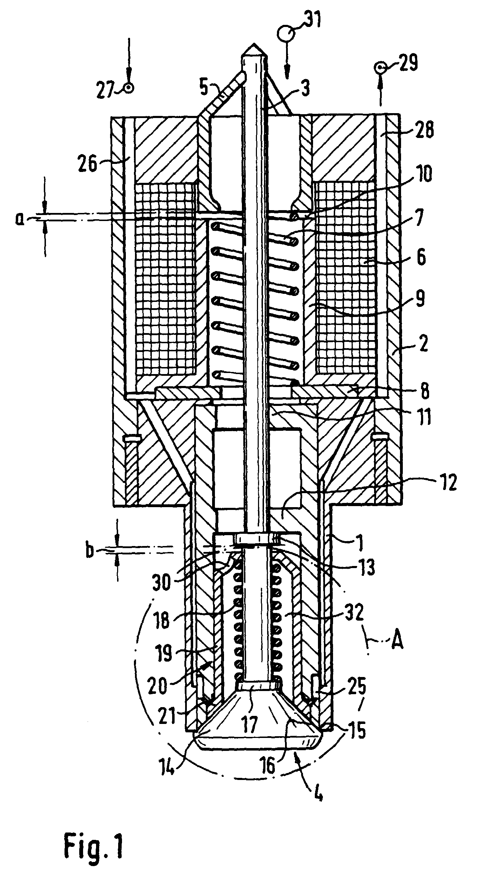

Die in Fig.1 dargestellte Vorrichtung besteht im wesentlichen aus einem rohrförmigen Gehäuse 1 für die Ventile und einem darauf aufgesetzten Gehäuse 2 für den Ventilantrieb.

Im Gehäuse 2 ist zentrisch der Schaft 3 eines äußeren Ventils, hier als Luftventil 4 vorgesehen, geführt. Sein oberes Ende ist mit einem ihn konzentrisch umgebenden Anker 5 verbunden, der in einem ringförmigen, im Gehäuse 2 angeordneten Elektromagneten 6 verschiebbar ist. Der Anker 5 stützt sich gegen eine Rückstellfeder 7 ab, die ihrerseits auf einer Platte 8 ruht, die zwischen den Gehäusen 1 und 2 angeordnet ist. Die Rückstellfeder 7 ist von einer Büchse 9 umgeben, deren oberes Ende 10 im Ruhezustand des Elektromagneten 6, d.h. bei geschlossenen Ventilen mit einem Abstand a vor der unteren Stirnfläche des Ankers 5 endet und für diesen einen Hubbegrenzungsanschlag bildet.

Das rohrförmige Gehäuse 1 weist im oberen Teil zwei mit axialem Abstand voneinander angeordnete Führungsschultern 11,12,für den Schaft 3 des Luftventiles 4 auf, der unterhalb der unteren Führungsschulter 12 einen Bund 13 als Anschlag trägt.

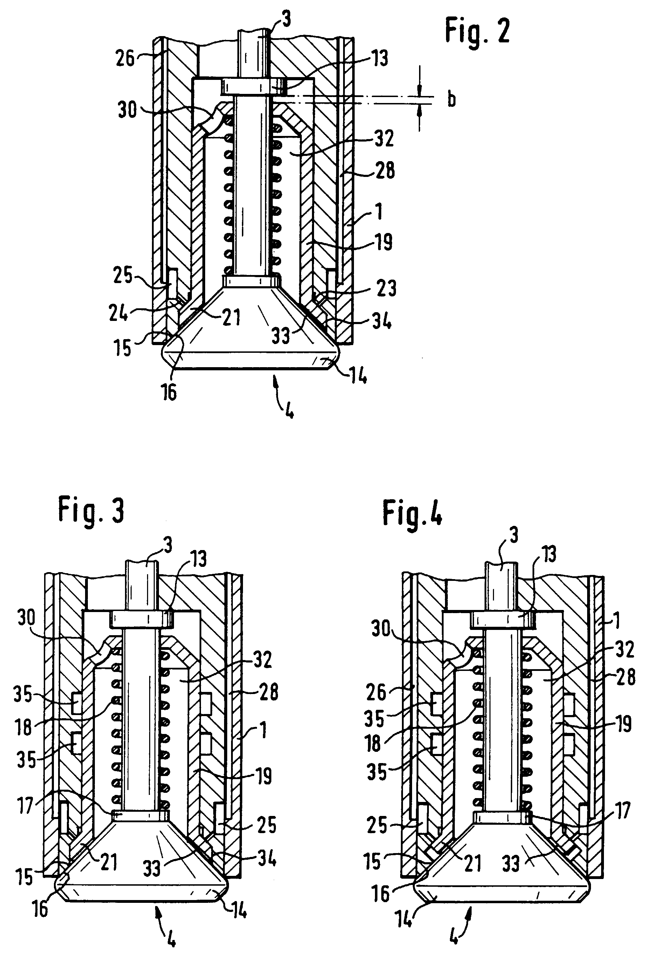

Am unteren Ende des Schaftes 3 ist ein sich konisch erweiterndes Ventilglied 14 angeordnet. dessen äußere Dichtungsfläche 15, wie insbesondere Fig.2 in vergrößertem Maßstab zeigt, auf einer Ventilsitzfläche 16 des Gehäuses 1 sitzt und die gesamte Ausblasöffnung der Vorrichtung völlig abschließt.

Ein Bund 17 am oberen Ende des Ventilgliedes 14 trägt eine Druckfeder 18, auf der ein glockenartiger, hohler Schaft 19 eines weiteren Ventils, des Kraftstoffventils 20 ruht. Die Oberseite dieses Schaftes 19 hat von der Unterseite des Bundes 13 einen Abstand b, der etwas kleiner ist als der erwähnte Abstand a.

Das untere Ende des Schaftes 19 ist als Ventilglied 21 konisch erweitert und liegt an einer weiteren, im Gehäuse 1 angeordneten Ventilsiczfläche 23 an. Die Ventilsitzfläche 23 weist in diesem Bereich mindestens eine etwa senkrecht hierzu angeordnete Drosselbohrung 24 durch das Gehäuse 1 auf, die mit einer ringförmigen Kraftstoffkammer 25 im Gehäuse 1 in Verbindung steht.

Der Gesamtquerschnitt derartiger Drosselbohrungen 24 soll kleiner sein als die kleinste Querschnittsfläche im übrigen Kraftstoffstrom, insbsondere auch kleiner als die Strömungsquerschnittsfläche am Kraftstoffventilsitz bei geöffnetem Kraftstoffventil 20

Diese Kraftstoffkammer 25 ist über eine in den Gehäusen 1 und 2 befindliche Zulaufleitung 26 mit einer Kraftstoffquelle 27 verbunden. Sie ist ferner auch über eine Rückleitung 28 mit einem Kraftstoffrücklauftank 29 oder dgl. verbunden. Hierdurch ist bei geschlossenem Ventil eine kontinuierliche Durchspülung und Kühlung der Vorrichtung gewährleistet. Zugleich werden Blasenbildung vermieden und bei Direkteinspritzung die Ventile wirksam gekühlt. Dies wiederum gewährleistet einen einwandfreien Rundlauf der Brennkraftmaschine insbesondere im Leerlauf nach einer Hochbelastungsphase.

Der mit einer oberen Öffnung 30 versehene glockenförmige Schaft 19 bildet eine Zulaufkammer 32 für Luft, die von einer Druckluftquelle 31 zentrisch durch den Anker 5, die Büchse 9 und das Gehäuse 1 in die Zulaufkammer 32 geführt wird.

Zwischen der äußeren Mantelfläche 15 des Ventilkörpers 14 und der inneren Mantelfläche 33 des Ventilkörpers 2 ist Spiel.

Es ist auch möglich, die Öffnung jeder Drosselbohrung 24 mit einem (nicht dargestellten) ringförmigen Wulst zu umgeben. Hierdurch würde die erforderliche Dichtfläche vermindert.

Es ist auch vorteilhaft, im Gehäuse 1 am Umfang des Schaftes 19 mindestens eine Ringnut 35 vorzusehen (Fig.3 und 4), die Leckageströme der Luft und/oder des Kraftstoffes vermeiden bzw. bremsen helfen.

Im Betrieb wird der Elektromagnet 6 taktweise erregt. Dabei wird der Anker 5 um das Maß a nach unten gezogen, wodurch sich zugleich der Ventilkörper 14 des Luftventils 4 von seiner Ventilsitzfläche 16 nach unten abhebt.

Sobald der Hub des Ventilschaftes 3 des Luftventils 4 eine Strecke entsprechend der Abstandsdifferenz a-b überschreitet, werden auch der Schaft 19 des Kraftstoffventils 20 mit der vorgesehenen zeitlichen Verzögerung bewegt und das Kraftstoffventil 20 geöffnet. Dabei wird der freigegebene Kraftstoff von der Luftströmung mitgerissen und fein zerstäubt. Gleichzeitig sorgt der vorher freigegebene und auch nach dem Schließen des Kraftstoffventils 20 noch wirksame Luftstrom für eine Kühlung und Säuberung der Ventilsitzfläche 16.

## Patentansprüche

1. Vorrichtung zum kombinierten Ausblasen von Kraftstoff und Luft, insbesondere für direkte Kraftstoffeinspritzanlagen bei Brennkraftmaschinen, mit einem Gehäuse (1), das je einen Kraftstoff- und Luftanschluß sowie eine mit beiden verbundene, mittels eines gemeinsamen Elektromagneten (6) betätigbarer Ventile verschließbare Ausblasöffnung aufweist,
wobei das Kraftstoffventil (20) das Luftventil (4) konzentrisch umgibt und beide zur Ausblasseite hin öffnen und
wobei das Kraftstoffventil (20) mit seiner äußeren Dichtungsfläche dichtend am Gehäuse anzuliegen vermag und mittels einer Federeinrichtung (18) so abgestützt und angeordnet ist, daß es erst nach einem anfänglichen Öffnungshub des Luftventils (4) öffnet und zeitlich vor dem Schließen des Luftventils schließt,
**dadurch gekennzeichnet,**
daß das Ventilglied (14) des Luftventils (4) mit seiner äußeren Dichtungsfläche (15) auf einer Ventilsitzfläche (16) des Gehäuses (1) zu sitzen und die gesamte Ausblasöffnung der Vorrichtung abzuschließen vermag und
daß, von der Ausblasseite gesehen, das Ventilglied (21) des Kraftstoffventils (20) mit seiner äußeren Dichtungsfläche einer hinter der Ventilsitzfläche (16) für das Luftventil (4) im Gehäuse (1) angeordneten Ventilsitzfläche (23) zugeordnet ist, derart,
daß das Kraftstoffventil (20) hinter der Ventilsitzfläche (16) des Luftventils (4) in die Luftströmung hinter der Ventilsitzfläche (16) des Luftventils (4) mündet.

2. Vorrichtung nach Anspruch 1, **dadurch gekennzeichnet,** daß die Zuleitung (26) für den Kraftstoff in eine ringförmige Kraftstoffkammer (25) mündet, an die mindestens eine kalibrierte Drosselbohrung (24) zur Ventilsitzfläche (23) für das Kraftstoffventil (20) anschließt.

3. Vorrichtung nach Anspruch 2, **dadurch gekennzeichnet,** daß an die Kraftstoffkammer (25) eine Kraftstoffrückleitung (28) angeschlossen ist.

## Claims

1. Apparatus for the combined ejection of fuel and air, more especially for direct fuel injection systems in internal combustion engines, having a housing (1) which is provided with a fuel connection and an air connection as well as an ejection aperture, which is connected to both connections and is closable by means of a common electromagnet (6) of actuatable valves, the fuel valve (20) concentrically surrounding the air valve (4), and both valves opening towards the ejection end, and the fuel valve (20) being able to abut sealingly against the housing with its external sealing face and being so supported and disposed by means of a spring arrangement (18) that it only opens after an initial opening stroke of the air valve (4) and closes per unit time prior to the closure of the air valve, characterised in that the valve member (14) of the air valve (4) can sit with its external sealing face (15) on a valve seat face (16) of the housing (1) and can close the entire ejection aperture of the apparatus, and in that, when viewed from the ejection end, the valve member (21) of the fuel valve (20) is associated, by its external sealing face, with a valve seat face (23), which is disposed in the housing (1) behind the valve seat face (16) for the air valve (4), in such a manner that the fuel valve (20) behind the valve seat face (16) of the air valve (4) terminates in the air flow behind the valve seat face (16) of the air valve (4).

2. Apparatus according to claim 1, characterised in that the feed pipe (26) for the fuel terminates in an annular fuel chamber (25), with which at least one calibrated throttle bore (24) communicates at the valve seat face (23) for the fuel valve (20).

3. Apparatus according to claim 2, characterised in that a fuel return pipe (28) communicates with the fuel chamber (25).

## Revendications

1. Dispositif pour l'éjection combinée de combustible et d'air, en particulier pour des installations d'injection de combustible directes dans des moteurs à combustion interne, comportant un carter (1), qui présente un raccord de combustible et un raccord d'air, ainsi qu'une ouverture d'éjection pouvant être fermée par deux soupapes reliées, actionnables au moyen d'un électroaimant commun (6), la soupape de combustible (20) entourant de façon concentrique la soupape d'air (4) et les deux s'ouvrant vers le côté d'éjection, et la soupape de combustible (20) pouvant s'appliquer de façon étanche sur le carter par sa surface d'étanchéité externe et étant agencée et appuyée au moyen d'un dispositif à ressort (18) de sorte qu'elle s'ouvre uniquement après une course d'ouverture initiale de la soupape d'air (4) et se ferme, dans le temps, avant la fermeture de la soupape d'air,
caractérisé en ce que l'organe de soupape (14) de la soupape d'air (4) peut reposer par sa surface d'étanchéité externe (15) sur une surface de siège de soupape (16) du carter (1) et fermer toute l'ouverture d'éjection du dispositif, et en ce que, vu du côté d'éjection, l'organe de soupape (21) de la soupape de combustible (20) est associé, par sa surface d'étanchéité externe, à une surface de siège de soupape (23) agencée dans le carter (1) derrière la surface de siège de soupape (16) pour la soupape d'air (4), de sorte que la soupape de combustible (20) débouche derrière la surface de siège de soupape (16) de la soupape d'air (4) dans le flux d'air derrière la surface de siège de soupape (16) de la soupape d'air (4).

2. Dispositif selon la revendication 1,
caractérisé en ce que le conduit d'amenée (26) pour le combustible débouche dans une chambre de combustible annulaire (25), à laquelle se raccorde au moins un perçage d'étranglement calibré (24) vers la surface de siège de soupape (23) pour la soupape de combustible (20).

3. Dispositif selon la revendication 2,
caractérisé en ce qu'un conduit de retour de combustible (28) est raccordé à la chambre de combustible (25).
